# EUROPÄISCHE PATENTSCHRIFT

(11) **EP 2 775 036 B1**
(45) Veröffentlichungstag und Bekanntmachung des Hinweises auf die Patenterteilung: **12.09.2018**
(21) Anmeldenummer: 13157810.6
(22) Anmeldetag: 05.03.2013
(51) Int. Cl.: E01H 10/00, B60P 1/40, B65G 65/40, B65D 88/62

(54) **System mit Streustoffbehälter und Flüssigkeitstank**
System with spreading material container and liquid tank
Système doté d'un conteneur de produits d'épandage et d'un réservoir de liquide

(43) Veröffentlichungstag der Anmeldung: 10.09.2014
(73) Patentinhaber: Küpper-Weisser GmbH, 78199 Bräunlingen (DE)
(72) Erfinder: Boschung, Marcel, 1680 Romont (CH); Isele, Rolf, 78234 Engen (DE)
(74) Vertreter: Klunker IP Patentanwälte PartG mbB

(56) Entgegenhaltungen:
- EP-A1- 0 579 311
- WO-A1-2006/068620
- DE-A1- 19 733 359
- US-A- 3 918 604
- US-A1- 2006 078 412

## Beschreibung

Die Erfindung betrifft ein System, insbesondere für Winterdienstfahrzeuge, welches ein Streugerät zum Ausstreuen von festen Streustoffen mit einem Streustoffbehälter zur Aufnahme der auszustreuenden festen Streustoffe und des Weiteren mindestens einen Flüssigkeitstank zum Anordnen innerhalb des Streustoffbehälters umfasst. Die Erfindung betrifft des Weiteren einen entsprechend angepassten Streustoffbehälter und einen entsprechend angepassten Flüssigkeitstank.

Aus der deutschen Offenlegungsschrift DE 10 2010 029 142 A1 ist ein Streugerät für Winterdienstfahrzeuge bekannt, welches drei verschiedene Streumethoden in sich vereint, nämlich Trockensalzstreuung, Feuchtsalzstreuung und reine Solestreuung. Normalerweise befindet sich die Sole für die Feuchtsalzstreuung und reine Solestreuung in einem Zusatztank, der beispielsweise seitlich des Streustoffbehälters, in dem das Streusalz aufbewahrt wird, montiert ist. Da die Zusatztanks zu klein sind, um eine Standard-Streustrecke von ca. 50 km mit reiner Sole zu streuen, wird in der DE 10 2010 029 142 A1 vorgeschlagen, den Streustoffbehälter wahlweise als weiteren Tankbehälter zur Aufnahme von Sole zu nutzen. Die Zusatztanks bleiben für den Fall erhalten, dass Feuchtsalz gestreut werden soll und der Streustoffbehälter zur Aufnahme fester Taustoffe benötigt wird.

Anstatt den Streustoffbehälter selbst als weiteren Tankbehälter zu verwenden, kann alternativ ein in den Streustoffbehälter einsetzbarer Flüssigkeitstank, insbesondere in Form eines Tanksacks, vorgesehen werden. Die für die reine Solestreuung benötigte Sole wird dabei in herkömmlicher Weise aus den Zusatztanks gefördert und die Zusatztanks werden von Zeit zu Zeit mit Sole aus dem Streustoffbehälter oder dem darin aufgenommenen Tanksack automatisch nachgefüllt. Dazu dient eine Pumpe, die über einen in den Streustoffbehälter bzw. Tanksack hineinragenden Schlauch die darin aufgenommene Sole in die Zusatztanks pumpt. Der Tanksack wird durch eine flexible Hülle mit variablem Volumen gebildet, so dass das Innenvolumen auf nahezu Null abnimmt, wenn der Tanksack leer ist, und sich entsprechend vergrößert, wenn der Tanksack mit flüssigen Taustoffen befüllt wird.

Das bekannte System ist jedoch in seiner Variabilität beschränkt, da die Zusatztanks für Flüssigkeit außen an dem Streustoffbehälter fest installiert sind und auch im Falle einer reinen Trockensalzstreuung mitgeführt werden müssen, obwohl sie nicht für feste Streustoffe genutzt werden können. Auch wenn die Zusatztanks entfernt werden würden, ist für eine vollständige Entleerung des Streustoffbehälters eine Trichterform bzw. eine nach unten verjüngende Form notwendig, damit die festen Streustoffe schwerkraftbedingt auf eine Fördereinrichtung in einer Bodenfläche des Streustoffbehälters rutschen und mittels dieser aus dem Streustoffbehälter hinaus befördert werden können. Dadurch ist das Volumen des Streustoffbehälters begrenzt.

Aus der DE 197 33 359 A1 und EP 0 579 311 A1 sind Streugeräte bekannt, bei denen flexible Flüssigkeitstanks in einem Behälter mit horizontaler Bodenfläche angeordnet sind. Schwenkbare Trennwände erlauben eine Veränderung des Volumens für die festen Streustoffe.

Aufgabe der vorliegenden Erfindung ist es daher, ein Streugerät mit einem Streustoffbehälter zur Aufnahme von auszustreuenden festen Streustoffen in Kombination mit einem Flüssigkeitstank vorzuschlagen, das eine hohe Variabilität hinsichtlich der Streustoffmethoden bei gleichzeitig verbesserter Volumenausnutzung bietet.

Diese Aufgabe wird durch ein Streugerät mit einem Streustoffbehälter zur Aufnahme der auszustreuenden festen Streustoffe und mindestens einem Flüssigkeitstank zum Anordnen innerhalb des Streustoffbehälters sowie durch einen entsprechend angepassten Streustoffbehälter und einen entsprechend angepassten Flüssigkeitstank mit den Merkmalen der unabhängigen Ansprüche gelöst. In davon abhängigen Ansprüchen sind vorteilhafte Ausgestaltungen und Weiterbildungen der Erfindung angegeben.

Erfindungsgemäß ist ein Streustoffbehälter vorgesehen, der eine horizontale oder nahezu horizontale Bodenfläche und eine Fördereinrichtung, beispielsweise eine Förderschnecke, die innerhalb der horizontalen oder nahezu horizontalen Bodenfläche verläuft, aufweist. Auf oder über der Bodenfläche ist mindestens ein Flüssigkeitstank innerhalb des Streustoffbehälters so angeordnet, dass bei einer zumindest teilweisen Füllung des Flüssigkeitstanks eine gegenüber der Bodenfläche zur Fördereinrichtung hin geneigte Gleitfläche für die auszustreuenden festen Streustoffe gebildet wird. Die geneigten Gleitflächen begrenzen somit ein Streustoffvolumen innerhalb des Streustoffbehälters, welches durch Befüllen und Entleeren des zumindest einen Flüssigkeitstanks variabel ist.

Durch die Verwendung eines Streustoffbehälters mit horizontaler oder nahezu horizontaler Bodenfläche statt eines trichterförmigen Streustoffbehälters kann das zur Verfügung stehende Volumen des Streugeräts, welches beispielsweise auf eine Lkw-Ladefläche aufgesetzt werden kann, optimal ausgenutzt werden. Zum einen kann für eine reine Trockensalzstreuung bei entleertem Flüssigkeitstank mehr fester Streustoff in dem Streustoffbehälter aufgenommen werden als in einem trichterförmigen Behälter. Dies wird ermöglicht, da durch Befüllen des zumindest einen Flüssigkeitstanks mit Luft eine geneigte Gleitfläche gebildet werden kann. Das heißt, während des Ausstreuens fester Streustoffe aus dem Streustoffbehälter wird der Flüssigkeitstank nach und nach aufgeblasen und die Neigung der Gleitfläche verändert. Dadurch ist eine vollständige Entleerung des Streustoffbehälters trotz der horizontalen oder nahezu horizontalen Bodenfläche des Streustoffbehälters gewährleistet. Zum anderen kann eine Feuchtsalzstreuung erfolgen, wenn der Flüssigkeitstank teilweise mit Sole gefüllt wird und das verbleibende Volumen des Streustoffbehälters mit festen Streustoffen aufgefüllt wird. Auch hier wird eine Entleerung der festen Streustoffe aufgrund der durch den Flüssigkeitstank gebildeten Gleitfläche sichergestellt. Soweit der Flüssigkeitstank aufgrund der sukzessiven Entnahme von Sole so weit in sich zusammen fällt, dass die Neigung der Gleitfläche unzureichend wird, kann der Flüssigkeitstank wieder entsprechend mit Luft aufgefüllt werden. Auch eine reine Solestreuung ist möglich, wenn der zumindest eine Flüssigkeitstank so weit gefüllt wird, so dass er annähernd das gesamte Volumen des Streustoffbehälters einnimmt.

In jedem Falle kann somit das Volumen des Streustoffbehälters, welches aufgrund der horizontalen oder nahezu horizontalen Bodenfläche insbesondere quaderförmig oder nahezu quaderförmig sein kann, optimal ausgenutzt werden. Streustoffbehälter mit einer horizontalen oder nahezu horizontalen Bodenfläche sind zudem preiswerter, da ihre Form mit im Wesentlichen senkrecht zueinander stehenden Seitenwänden einfacher herzustellen ist als eine Trichterform. Auch sind keine außenliegenden Zusatztanks, damit verbundene Entlüftungsventile und weniger Verrohrung notwendig, was den Aufbau des Systems insgesamt vereinfacht und Kosten spart. Ein weiterer Vorteil ergibt sich dadurch, dass die Flüssigkeitstanks kostengünstig ausgewechselt werden können.

Unter einem Streustoffbehälter mit einer horizontalen oder nahezu horizontalen Bodenfläche wird insbesondere ein Streustoffbehälter verstanden, dessen Bodenfläche gegenüber der Horizontalen eine derart geringe Neigung aufweist, die kein oder nahezu kein selbstständiges, schwerkraftbedingtes Rutschen von festen Streustoffen erlaubt. Beispielsweise kann die Bodenfläche in jedem Bereich gegenüber der Horizontalen eine Neigung von weniger als 20° aufweisen. Dabei kann die Bodenfläche sowohl zu der Fördereinrichtung hin als auch von ihr weg geneigt sein. Da die geneigte Gleitfläche durch den zumindest einen Flüssigkeitstank und nicht durch die Bodenfläche gebildet wird, ist dennoch eine vollständige Entleerung des Streustoffbehälters möglich. Ferner ist unter einem quaderförmigen oder nahezu quaderförmigen Streustoffbehälter ein Streustoffbehälter mit horizontaler oder nahezu horizontaler Bodenfläche und im Wesentlichen senkrechten Seitenwänden zu verstehen. Die Seitenwände können auch eine gewisse Neigung aufweisen, beispielsweise bis maximal 20° bezüglich der Vertikalen. Die Form der Oberseite des Streustoffbehälters ist dabei für die Erfindung unwesentlich. Die Oberseite kann ebenfalls horizontal oder nahezu horizontal ausgebildet sein, oder aber eine beliebige Form aufweisen, beispielsweise eine Dachform, die ein Abfließen von Niederschlägen erlaubt.

In dem Streustoffbehälter können insbesondere zwei Flüssigkeitstanks vorgesehen werden, die auf oder über der Bodenfläche auf gegenüberliegenden Seiten der Fördereinrichtung angeordnet sind. Die Fördereinrichtung kann dabei beispielsweise im Wesentlichen mittig und in Längsrichtung laufend in der Bodenfläche des Streustoffbehälters angeordnet sein. Auf diese Weise kann durch die geneigten Gleitflächen eine Trichterform des Streustoffvolumens erreicht werden. Die folgenden Ausführungen sind somit jeweils insbesondere auch für einander gegenüberliegende Flüssigkeitstanks zu verstehen.

Vorzugsweise ist der mindestens eine Flüssigkeitstank ausgebildet, im vollständig entleerten Zustand innerhalb des Streustoffbehälters zu verbleiben, wobei gleichzeitig auszustreuende feste Streustoffe in dem Streustoffbehälter aufgenommen und mittels des Streugeräts ausgestreut werden können. Der Flüssigkeitstank muss somit nicht aus dem Streustoffbehälter entnommen werden, wenn eine reine Trockensalzstreuung erfolgen soll. Dies wird insbesondere durch die flexible Hülle des Flüssigkeitstanks begünstigt, der es dem Flüssigkeitstank ermöglicht, in sich zusammenzufallen oder sich zusammenzufalten. Darüber hinaus kann der Flüssigkeitstank auf seiner der Streustoffbehälterwand zugewandten Seite eine Platte oder einen festen Rahmen aufweisen oder ein steifes Material umfassen, so dass gewährleistet ist, dass der Flüssigkeitstank während des Zusammenfaltens bzw. In-Sich-Zusammenfallens an der Streustoffbehälterwand anliegt und dementsprechend im entleerten Zustand die Fördereinrichtung am Grund des Streustoffbehälters nicht blockiert.

Falls die geneigte Gleitfläche durch den Flüssigkeitstank selbst gebildet wird, kann es aufgrund seiner flexiblen Hülle bei einer nur teilweisen Füllung des Flüssigkeitstanks zu Faltenbildung kommen. Insbesondere wenn der Flüssigkeitstank während des Entleerens in sich zusammenfällt, können Falten entstehen, in denen sich in dem Streustoffbehälter befindliche feste Streustoffe absetzen, so dass das Entleeren des Streustoffbehälters erschwert wird. Daher ist es vorteilhaft, zumindest eine bewegliche Platte vorzusehen, um die Gleitfläche zu bilden. Die zumindest eine bewegliche Platte ist dabei vorzugsweise derart in dem Streustoffbehälter angeordnet oder kann derart in dem Streustoffbehälter angeordnet werden, dass sich der zumindest eine Flüssigkeitstank zwischen der Bodenfläche und/oder einer Seitenfläche des Streustoffbehälters und der zumindest einen beweglichen Platte befindet. Die geneigte Gleitfläche wird somit zumindest teilweise durch eine Oberfläche der zumindest einen beweglichen Platte gebildet. Die Oberfläche des Flüssigkeitstanks, welche zur Faltenbildung neigen kann, wird durch die zumindest eine bewegliche Platte bedeckt. Die Platte ist beweglich, so dass die Variabilität des Volumens des Flüssigkeitstanks durch Veränderung der Flüssigkeitstankbefüllung erhalten bleibt. Die Stellung der zumindest einen beweglichen Platte hängt somit von der Füllmenge des Flüssigkeitstanks ab, insbesondere wenn die Platten nicht aktiv, zum Beispiel elektromotorisch, pneumatisch oder hydraulisch, bewegt werden sondern frei beweglich sind und aufgrund der Schwerkraft auf dem zumindest einen Flüssigkeitstank aufliegen. Es ist jedoch auch möglich, die zumindest eine bewegliche Platte aktiv zu bewegen, wobei in diesem Falle entsprechende Stellglieder und eine entsprechende Steuerung vorzusehen sind.

Bevorzugt ist die zumindest eine bewegliche Platte derart mit dem Streustoffbehälter gelenkig verbunden, dass in dem Streustoffbehälter aufgenommene feste Streustoffe schwerkraftbedingt entlang der geneigten Gleitfläche zur Fördereinrichtung in der Bodenfläche des Streustoffbehälters rutschen. Alternativ oder zusätzlich kann die zumindest eine bewegliche Platte aber auch mit dem Flüssigkeitstank fest verbunden sein. Durch eine vorzugsweise starre Platte als Teil des Streustoffbehälters und/oder des Flüssigkeitstanks ist jederzeit eine glatte Gleitfläche vorhanden, so dass ein Rutschen des festen Streustoffs entlang der Gleitfläche erleichtert wird.

In einer bevorzugten Ausgestaltung der Erfindung sind zumindest zwei bewegliche Platten vorgesehen. Mindestens eine der beweglichen Platten ist dabei in einem oberen Bereich des Streustoffbehälters um eine horizontale Drehachse schwenkbar angeordnet und mindestens eine weitere der beweglichen Platten ist um eine dazu parallele Drehachse in einem unteren Bereich des Streustoffbehälters schwenkbar angeordnet. Durch Vorsehen von zwei zusammenwirkenden beweglichen Platten kann im Vergleich zu einem Ausführungsbeispiel mit nur einer beweglichen Platte das Volumen des Flüssigkeitstanks vergrößert werden, da eine viereckige Querschnittsform des Flüssigkeitstanks erreicht werden kann. Falls nur eine Platte vorgesehen ist, ist es notwendig, dass diese relativ lang ausgebildet wird, um eine ausreichend lange Gleitfläche zu bilden. Aufgrund des begrenzten Volumens des Streustoffbehälters schränkt dies jedoch den Schwenkwinkel der Platte ein. Falls zumindest zwei Platten vorgesehen werden, können diese kürzer sein und dementsprechend weiter verschwenkt werden. Dabei ist es vorteilhaft, wenn die im oberen Bereich angelenkte Platte die im unteren Bereich angelenkte Platte überlappt und über der unten angelenkten Platte liegt, um zu vermeiden, dass feste Streustoffe zwischen und unter die Platten gelangen. Dazu kann beispielsweise auch eine Dichtung, wie eine Dichtschürze zwischen den beiden Platten vorgesehen werden.

Weiter bevorzugt können auch zumindest zwei bewegliche Platten vorgesehen sein, welche gelenkig miteinander verbunden sind. Dies erhöht die Variabilität des Volumens des Flüssigkeitstanks und des Streustoffbehälters weiter. Beispielsweise können drei beweglich Platten vorgesehen werden, wobei eine in einem unteren Bereich des Streustoffbehälters um eine horizontale Drehachse schwenkbar angeordnet ist und eine zweite Platte in einem oberen Bereich des Streustoffbehälters um eine dazu parallele Drehachse schwenkbar angeordnet ist, wobei an dem freien Ende der oberen Platte die dritte Platte gelenkig angebracht sein kann. So ist es möglich, mit den Platten ein Volumen für den Flüssigkeitstank zu umschließen, welches einen fünfeckigen Querschnitt aufweist.

Vorzugsweise sind mehrere bewegliche Platten derart ausgebildet, dass sie gemeinsam einen quaderförmigen oder prismenförmigen Volumenanteil des Volumens des Streustoffbehälters umschließen kann, in welchem der Flüssigkeitstank untergebracht ist. Eine Prismenform, insbesondere ein dreiseitiges, vierseitiges oder fünfseitiges Prisma kann beispielsweise durch eine mehrteilige Platte oder durch mehrere gelenkig miteinander verbundene Platten, welche entsprechend gelenkig mit dem Streustoffbehälter verbunden sind, erreicht werden. Zur Bildung einer Quaderform sind zwei bewegliche Platten erforderlich. Durch entsprechende Wahl der Platten, insbesondere deren Form, Abmessungen und Verbindungen zu dem Streustoffbehälter, Flüssigkeitstank und/oder untereinander kann so eine hohe Variabilität des Streustoffvolumens und des Flüssigkeitsvolumens erreicht werden.

Vorzugsweise ist die zumindest eine bewegliche Platte gegen den Streustoffbehälter derart abgedichtet, dass verhindert wird, dass in dem Streustoffbehälter aufgenommene Streustoffe auf eine Seite der beweglichen Platte gelangen, welche von der Gleitfläche abgewandt ist. Insbesondere an Rändern der Platten, welche an die Drehachsen angrenzen, ist eine Abdichtung gegen die entsprechenden Seitenwände des Streustoffbehälters sinnvoll, damit die Streustoffe nicht unter die beweglichen Platten geraten, was eine aufwändige Reinigung erforderlich machen würde, da Streustoffe, die unter die Platten gelangt sind, nicht von der Fördereinrichtung erfasst und aus dem Streustoffbehälter hinaus befördert werden können. Die Abdichtung kann durch entsprechende Dichtungen, beispielsweise Dichtlippen, erfolgen, welche bei einer Bewegung der Platten an der entsprechenden Seitenwand des Streustoffbehälters entlang gleiten.

In einer bevorzugten Ausgestaltung der Erfindung ist in dem Flüssigkeitstank eine expandierbare Vorrichtung angeordnet, welche vorteilhaft zumindest teilweise aus einem elastischen Material besteht, so dass die expandierbare Vorrichtung ballonartig expandieren kann. Auf diese Weise ist es möglich, die geneigte Gleitfläche aufrecht zu erhalten, auch wenn keine oder nur wenig Flüssigkeit in dem Flüssigkeitstank aufgenommen ist. Die expandierbare Vorrichtung ist dazu vorzugsweise in einem unteren Bereich, insbesondere nahe der Bodenfläche des Streustoffbehälters, in dem Flüssigkeitstank angeordnet und kann als aufblasbarer Sack oder Ballon ausgebildet sein.

Insbesondere kann auch während des Entleerens des Flüssigkeitstanks das Volumen des Flüssigkeitstanks insgesamt aufrecht erhalten werden, indem die expandierbare Vorrichtung in dem Maße expandiert wird, wie Flüssigkeit aus dem Flüssigkeitstank entnommen wird. Wenn die in dem Flüssigkeitstank aufgenommene Flüssigkeit dabei stets im oberen Bereich des Flüssigkeitstanks gehalten wird, kann der Flüssigkeitstank vorteilhaft ohne den Einsatz einer Pumpe nur durch die Ausnutzung hydrostatischer Kräfte und gegebenenfalls eines Regelventils entleert werden, wobei sich dazu der Anschluss zur Entleerung des Flüssigkeitstanks in seinem oberen Bereich befindet. Dies ist zumindest bei Streueinsätzen vorteilhaft, bei denen kein Druck zur Ausbringung der Flüssigkeit erforderlich ist. Der gleiche Effekt kann auch erzielt werden, wenn das aus dem Flüssigkeitstank entnommene Volumen durch Luft kompensiert wird, welche beim Entleeren des Flüssigkeitstanks in den Flüssigkeitstank hineingepumpt wird. Hierzu ist in beiden Fällen ein Druckventil vorteilhaft, um einen Druck in dem Flüssigkeitstank oder in der expandierbaren Vorrichtung aufbauen zu können.

Gemäß einer besonders bevorzugten Ausgestaltung der Erfindung besteht der Flüssigkeitstank aus einem elastischen Material, insbesondere aus einem Latex, welches sich beim Befüllen dehnt und der Form des Streustoffbehälters anpasst. Im entleerten Zustand nimmt der Tanksack dann besonders wenig Platz ein. Die elastische Dehnbarkeit des Materials im Sinne der Erfindung beträgt mehr als 20%, vorzugsweise mehr als 50% und besonders bevorzugt mehr als 100%. Der Flüssigkeitstank kann in dieser bevorzugten Ausgestaltung somit ballonartig expandieren.

Das erfindungsgemäße System ermöglicht ein einfaches Entleeren des Streustoffbehälters, da in dem Streustoffbehälter aufgenommene Streustoffe entlang der Gleitfläche in Richtung der Fördereinrichtung rutschen können. Um ein Entleeren zu ermöglichen, auch wenn sich die Streustoffe festgesetzt haben, können der zumindest eine Flüssigkeitstank und/oder gegebenenfalls die expandierbare Vorrichtung pulsierend zumindest teilweise gefüllt und geleert werden, um in dem Streustoffbehälter aufgenommene Streustoffe zu lockern. Dabei kann das Füllen entweder mit Luft, insbesondere Druckluft erfolgen. Wenn eine expandierbare Vorrichtung, wie ein aufblasbarer Ballon, in dem Flüssigkeitstank vorgesehen ist, kann beispielsweise Druckluft pulsierend in den Ballon gepumpt und wieder abgelassen werden. In dem Streustoffbehälter aufgenommene Streustoffe können auf diese Weise gelockert werden, um beispielsweise eine Tunnel- oder Brückenbildung zu verhindern oder - wenn es bereits dazu gekommen ist - diese zu lösen. Dieses Problem tritt auf, wenn die Fördereinrichtung am Boden des Streustoffbehälters Streustoffe wegfördert und keine Streustoffe nachrutschen.

Es kann auch vorteilhaft sein, die auszustreuenden Streustoffe vor dem Austreuen auf die Straße zu erwärmen, um ihre Haftung auf Eis und ihre Tauwirkung zu verbessern. Dazu können in dem Streustoffbehälter aufgenommene Streustoffe erwärmt werden, indem der zumindest eine Flüssigkeitstank vor dem Entleeren des Streustoffbehälters mit einem erwärmten Fluid zumindest teilweise befüllt wird. Beispielsweise kann die Sole vor dem Einfüllen in die Flüssigkeitstanks erwärmt werden, wodurch gleichzeitig die festen Streustoffe erwärmt werden, da sich der Flüssigkeitstank in dem Streustoffbehälter befindet. Vorteilhaft ist es, die Sole beim Ausbringen auf die Straße mittels eines Durchlauferhitzers zu erwärmen, da so gewährleistet werden kann, dass die Sole beim Ausbringen eine gewünschte Temperatur aufweist. Wird die Sole lediglich vor oder während des Befüllens erwärmt, kann die erwärmte Sole aufgrund mangelnder Wärmeisolierung des Tanks mit der Zeit abkühlen.

Nachfolgend wird die Erfindung beispielhaft anhand der begleitenden Zeichnungen erläutert. Darin zeigen:
- Figur 1: ein erfindungsgemäßes Streugerät in perspektivischer Ansicht mit zwei teilweise gefüllten Tanksäcken,
- Figur 2a: eine schematische Schnittdarstellung eines ersten Ausführungsbeispiels eines Streugeräts,
- Figur 2b: eine schematische Schnittdarstellung des ersten Ausführungsbeispiels des Streugeräts mit vollständig entleerten Tanksäcken,
- Figur 2c: eine schematische Schnittdarstellung des ersten Ausführungsbeispiels des Streugeräts mit vollständig gefüllten Tanksäcken,
- Figur 3a bis 3c: eine schematische Schnittdarstellung eines zweiten Ausführungsbeispiels eines Streugeräts bei unterschiedlichen Füllständen,
- Figur 4a bis 4c: eine schematische Schnittdarstellung eines dritten Ausführungsbeispiels eines Streugeräts bei unterschiedlichen Füllständen,
- Figur 5a bis 5c: eine schematische Schnittdarstellung eines vierten Ausführungsbeispiels eines Streugeräts bei unterschiedlichen Füllständen,
- Figur 6: eine schematische Schnittdarstellung eines fünften Ausführungsbeispiels eines Streugeräts,
- Figur 7: eine schematische Schnittdarstellung eines sechsten Ausführungsbeispiels eines Streugeräts,
- Figur 8: eine schematische Schnittdarstellung eines siebten Ausführungsbeispiels eines Streugeräts,
- Figur 9: ein Streugerät aus dem Stand der Technik in perspektivischer Ansicht mit zwei gefüllten Tanksäcken und
- Figur 10: das Streugerät aus Figur 5 mit entleerten Tanksäcken.

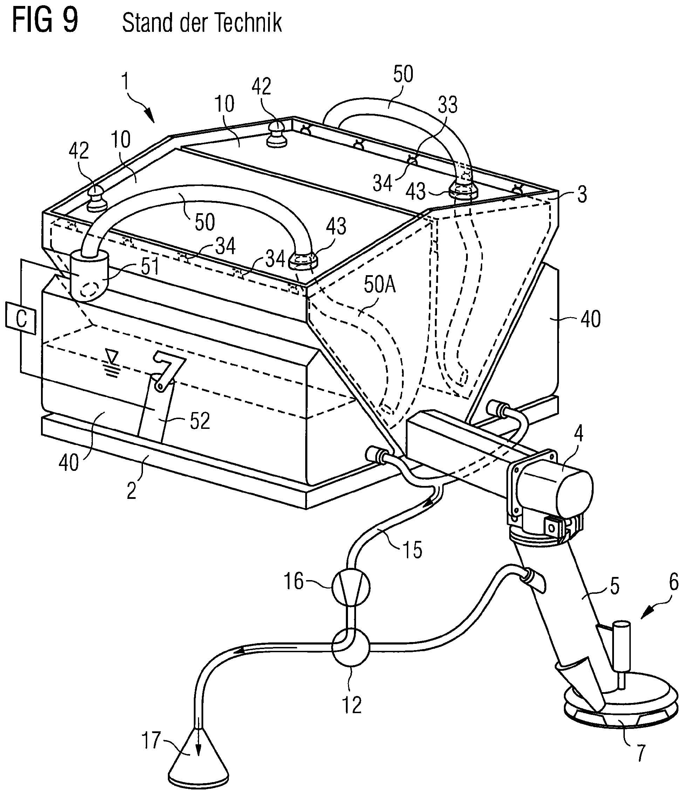

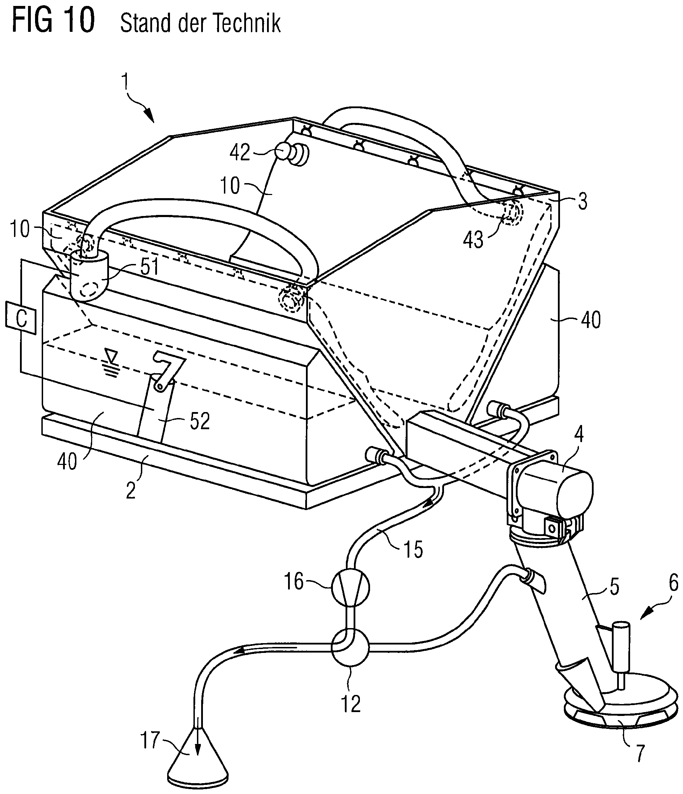

Figur 9 und 10 zeigen ein aus dem Stand der Technik bekanntes Aufsatz-Streugerät 1 als Aufbau auf eine Ladefläche eines LKWs, der hier nicht explizit dargestellt ist. Auf einen geschweißten Trägerrahmen 2 ist ein Streustoffbehälter 3 aufgebaut. Eine Förderschnecke (in Fig. 9 und 10 nicht dargestellt) am Grund des Streustoffbehälters 3 transportiert feste Streustoffe, insbesondere Streusalz, aus dem Streustoffbehälter 3 hinaus zu einem Auslass 4, durch den hindurch die Streustoffe wiederum schwerkraftbedingt in das Fallrohr 5 einer Streueinrichtung 6 und durch das Fallrohr 5 hindurch auf einen Streuteller 7 der Streueinrichtung 6 fallen können.

Der bekannte Streustoffbehälter 3 weist einen trichterförmigen Querschnitt auf, so dass sich in dem Streustoffbehälter 3 aufgenommene Streustoffe am konisch zusammenlaufenden Grund des Streustoffbehälters 3 sammeln. Zwei Zusatztanks 40 für Flüssigkeit, insbesondere für eine Salzlösung (Sole), sind vorgesehen, um den durch das Fallrohr 5 hindurchfallenden trockenen Streustoffen in geeignet dosierter Menge Flüssigkeit zuzumischen. Dies erfolgt in an sich bekannter Weise über eine Saugleitung 15 unter Verwendung einer entsprechend angesteuerten Pumpe 16. Der Ort der Zumischung muss nicht notwendigerweise im Fallrohr 5 selbst liegen, sondern kann beispielsweise auch erst am unteren Ende des Fallrohrs 5 auf dem Streuteller 7 erfolgen.

Um die Soleaufnahmekapazität des Streugeräts 1 zu erhöhen, sind in dem Streustoffbehälter 3 zwei Flüssigkeitstanks 10 eingesetzt und jeweils über eine Flüssigkeitsleitung 50 mit den Zusatztanks 40 verbunden. Die Flüssigkeitstanks 10 können über Einfüllstutzen 42 mit Sole befüllt werden. Zusätzlich zu den Einfüllstutzen 42 sind Durchführstutzen 43 vorgesehen, durch die hindurch die Flüssigkeitsleitungen 50 mit einer Schlauchverlängerung 50A in den jeweiligen Flüssigkeitstank 40 hineingeführt sind. Die Schlauchverlängerung 50A reicht bis zum Grund des Flüssigkeitstanks 10. So kann der Flüssigkeitstank 10 durch die Flüssigkeitsleitung 50 hindurch vollständig entleert und die Sole den Zusatztanks 40 zugeleitet werden. Dazu dient eine Saugpumpe 51, welche Signale von einem Schwimmer 52 über den Füllstand der Zusatztanks 40 empfangen kann. Alternativ kann der Flüssigkeitstank 10 auch ohne Verwendung einer Saugpumpe entleert werden, beispielsweise durch das Ausnutzen hydrostatischer Kräfte.

Die Flüssigkeitstanks 10 werden jeweils durch einen Tanksack gebildet, der - wie beschrieben - in den Streustoffbehälter 3 eingesetzt ist. Der Tanksack 10 besteht aus einem flexiblen Material, so dass sein Innenvolumen beim Befüllen und Entleeren des Tanksacks mit Flüssigkeit entsprechend angepasst werden kann.

In Figur 9 sind die beiden Tanksäcke 10 im gefüllten Zustand dargestellt. Der Einfüllstutzen 42 ist geschlossen, vorzugsweise luftdicht verschlossen. Wenn der Tanksack 10 insgesamt luftdicht verschlossen ist, so hat dies zur Folge, dass beim Entleeren des Tanksacks 10 ein Unterdruck im Tanksack 10 entsteht, der dazu führt, dass der Tanksack 10 in sich zusammenfällt. Bei geeigneter Ausbildung des Tanksacks 10 legt oder faltet sich der Tanksack 10 bei diesem Vorgang selbständig zusammen. Dieser Zustand des in sich zusammengefalteten Tanksacks 40 ist in Figur 10 dargestellt.

Um ein Zusammenfallen, Zusammenfalten oder Zusammenlegen zu ermöglichen, werden die Tanksäcke 10 am Streustoffbehälter 3 entsprechend befestigt. Dabei kann die Befestigung 33, 34 derart sein, dass die Tanksäcke 10 dem Streustoffbehälter 3 entnehmbar sind, falls sie längere Zeit nicht benötigt werden. Auch eine dauerhafte Montage der Tanksäcke 10 in dem Streustoffbehälter 3 ist möglich.

Die Funktionen reine Solestreuung, Trockensalzstreuung oder Feuchtsalzstreuung lassen sich mit der Pumpe 16 und geeigneten Ventilen 12 erreichen. Mittels des als Dreiwegehahn ausgebildeten Ventils 12 (zum Beispiel Kugelhahn) kann die Pumpe 16 mit der Sprüheinrichtung 17 oder mit dem Fallrohr 5 verbunden werden, um zwischen der reinen Solestreuung und der Feuchtsalzstreuung umzuschalten. Falls Trockensalz gestreut werden soll, also ohne Zumischung von Sole aus den Zusatztanks 10, kann entweder die Pumpe 16 abgeschaltet oder der Dreiwegehahn 12 so verschwenkt werden, dass der Leitungsweg von der Pumpe 16 sowohl zur Sprüheinrichtung 17 als auch zur Streueinrichtung 6 unterbrochen ist. Andererseits ist es mit der in Figur 9 dargestellten Stellung des Dreiwegehahns 12 auch möglich, sowohl Trockensalz mittels der Streueinrichtung 6 als auch reine Sole mittels der Sprüheinrichtung 17 zu streuen. Durch geeignete Abwandlung des Systems, beispielsweise durch andere oder zusätzliche Wegeventile und/oder zusätzliche Leitungen und/oder Leitungsverzweigungen und/oder durch ein oder mehrere weitere Pumpen kann auch gewährleistet werden, gleichzeitig reine Sole über die Sprüheinrichtung 17 sowie Feuchtsalz über die Streueinrichtung 6 zu streuen.

Nachteilig bei dem bekannten Streugerät ist, wie eingangs erwähnt, der komplexe Aufbau, der viele Rohrleitungen erfordert. Zudem kann das Volumen des Streugeräts nicht optimal genutzt werden, insbesondere falls das Streugerät abwechselnd für die verschiedenen Funktionen reine Solestreuung, Trockensalzstreuung oder Feuchtsalzstreuung verwendet werden soll. Die Zusatztanks 40 sind fest installiert und müssen auch mitgeführt werden, falls keine Sole benötigt wird. Die Zusatztanks 40 sind für feste Streustoffe nicht geeignet. Durch die notwendige Trichterform, durch welche ein schwerkraftbedingtes Rutschen der festen Streustoffe auf die Förderschnecke ermöglicht wird, ist das Streustoffvolumen durch die schrägen Bodenflächen weiter begrenzt.

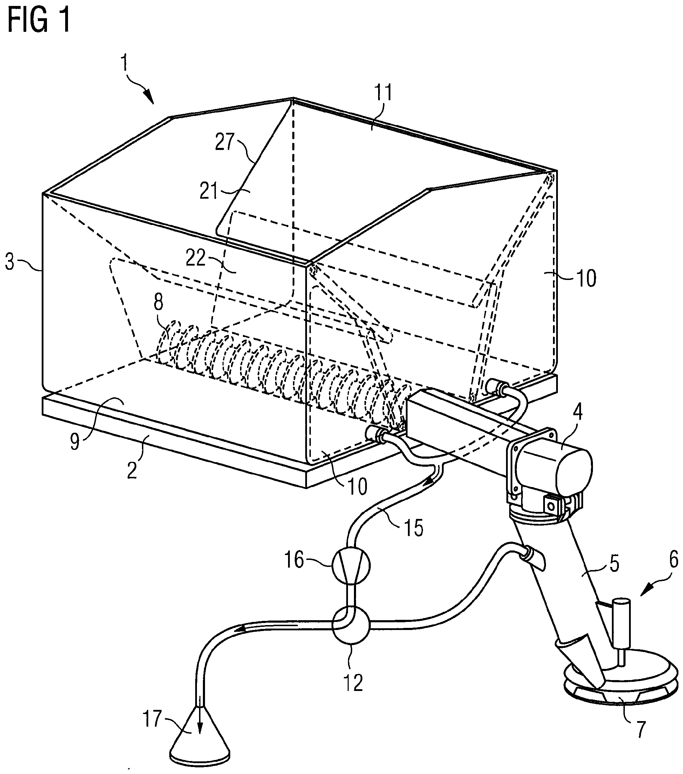

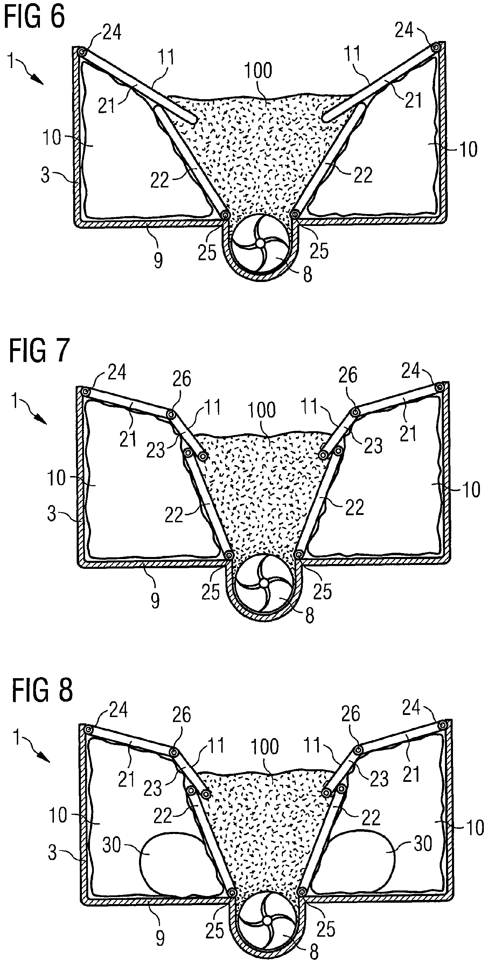

Daher ist, wie in Figur 1 dargestellt, erfindungsgemäß vorgesehen, dass der Streustoffbehälter 3 eine horizontale Bodenfläche 9 aufweist, in der die Fördereinrichtung 8 angeordnet ist. In diesem Ausführungsbeispiel sind die Seitenwände des Streustoffbehälters 3 im Wesentlichen senkrecht ausgebildet, so dass sich - von dem geneigten Dach des Streustoffbehälters 3 abgesehen - ein quaderförmiges Volumen ergibt. Innerhalb des Streustoffbehälters 3 sind die Flüssigkeitstanks 10 in Form von flexiblen Tanksäcken zur Aufnahme von Sole angeordnet. Diese sind an die horizontale Bodenfläche 9 des Streustoffbehälters 3 angepasst, so dass im Gegensatz zu dem bekannten Streugerät keine außen angebrachten Zusatztanks 40 notwendig sind. Die Flüssigkeitstanks 10 dienen außerdem dazu, eine geneigte Gleitfläche 11 für die festen Streustoffe bereitzustellen, da aufgrund der horizontalen Bodenfläche 9 sonst keine vollständige Entleerung des Streustoffbehälters 3 möglich wäre. Die Gleitfläche 11 wird in dem Ausführungsbeispiel gemäß Figur 1 (siehe auch Figur 6) durch bewegliche Platten 21, 22 gebildet, welche an ihren Rändern mittels einer Dichtung 27 gegen die Seitenwände des Streustoffbehälters 3 abgedichtet sind, um zu verhindern, dass feste Streustoffe unter die Platten 21, 22 gelangen. Im Übrigen entspricht das Streugerät in seinem Aufbau und insbesondere seiner Funktionsweise dem ausführlich beschriebenen Streugerät gemäß dem Stand der Technik nach Figuren 9 und 10.

Das erfindungsgemäße System weist eine hohe Variabilität auf, da der Streustoffbehälter 3 erstens für eine reine Trockensalzstreuung nahezu vollständig mit festen Streustoffen befüllt werden kann, wenn die Tanksäcke 10 leer sind, oder zweitens eine Füllung sowohl der Tanksäcke 10 als auch des Streustoffbehälters 3 für eine Feuchtsalzstreuung erfolgen kann, oder drittens auch eine vollständige Füllung der Tanksäcke 10 für eine reine Solestreuung möglich ist. Es ist möglich, die Tanksäcke 10 fest in dem Streustoffbehälter 3 zu installieren oder diese als separate Elemente auszubilden, so dass die Tanksäcke 10 aus dem Streustoffbehälter 3 entnommen und gegebenenfalls ausgewechselt werden können. Die Funktionsweise entspricht ansonsten der des in Zusammenhang mit Figuren 9 und 10 beschriebenen bekannten Streugeräts 1.

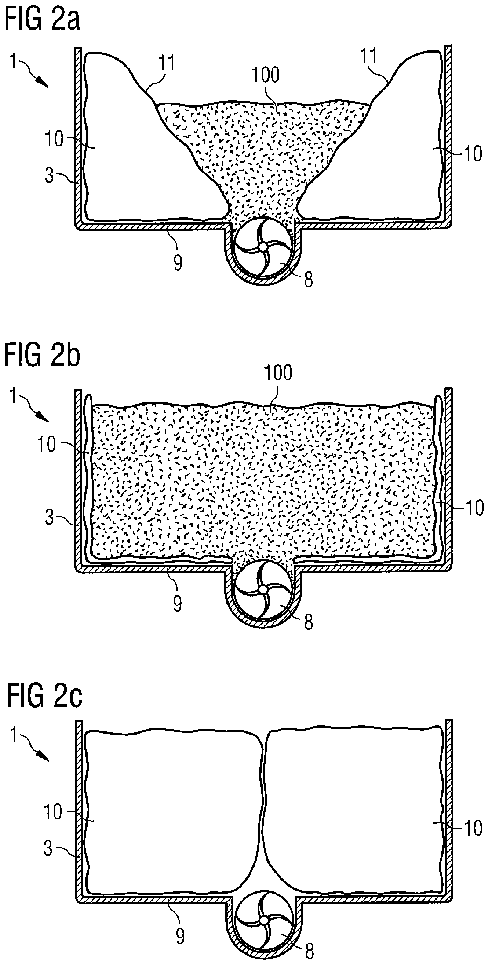

In den Figuren 2a bis 8 sind schematisch verschiedene Ausführungsbeispiele und Betriebszustände des Streugeräts 1 dargestellt. Figur 2a zeigt ein Ausführungsbeispiel eines Streugeräts 1 mit einem Streustoffbehälter 3 und einer Förderschnecke 8 in einer horizontalen Bodenfläche 9 des Streustoffbehälters 3, wobei zwei Tanksäcke 10 in dem Streustoffbehälter 3 aufgenommen sind. Die Tanksäcke 10 sind teilweise mit Sole gefüllt und bilden zu einer Förderschnecke 8 hin geneigte Gleitflächen 11 für die auszubringenden festen Streustoffe, wie Streusalz 100. Die Tanksäcke 10 weisen eine zumindest teilweise flexible Hülle auf, die während ihrer Entleerung in sich zusammenfällt.

Wenn die Tanksäcke 10 leer sind, kann das komplette Volumen des Streustoffbehälters 3 als Streustoffvolumen für das Streusalz 100 verwendet werden, wie in Figur 2b dargestellt. Andererseits können die Tanksäcke 10 auch vollständig mit Sole gefüllt werden, so dass das Volumen des Streustoffbehälters 3 vollständig oder nahezu vollständig für Sole verwendet werden kann, wie in Figur 2c dargestellt. Hierzu können die Tanksäcke 10 elastisch oder zumindest teilweise elastisch ausgebildet sein. Die Tanksäcke 10 können aus Stabilitätsgründen einen steifen Boden und/oder eine zur Seitenwand des Streustoffbehälters 3 weisende steife Rückwand aufweisen. Falls die Tanksäcke 10 vollständig unelastisch ausgebildet sind, können sie beispielsweise quaderförmig sein oder einen dreieckigen Querschnitt aufweisen. Falls die Tanksäcke 10 vollständig flexibel sind, ist es vorteilhaft eine entsprechende Befestigung am Streustoffbehälter 3 vorzusehen, beispielsweise in Form von Haken und Ösen oder einer Vorhangschiene. Die Tanksäcke 10 sind in jedem Falle so ausgebildet, dass sie nicht mit der Förderschnecke 8 kollidieren. Die Tanksäcke 10 können dazu in der Nähe der Förderschnecke 8 am Boden des Streustoffbehälters 3 fixiert sein. An den Seiten des Streustoffbehälters 3 können die Tanksäcke 10 je nach gewünschter Anwendung in vertikaler Richtung verschieblich oder alternativ im oberen Bereich ortsfest fixiert sein. Die Tanksäcke 10 können auch ohne ortsfeste Fixierung in dem Streustoffbehälter 3 vorgesehen werden.

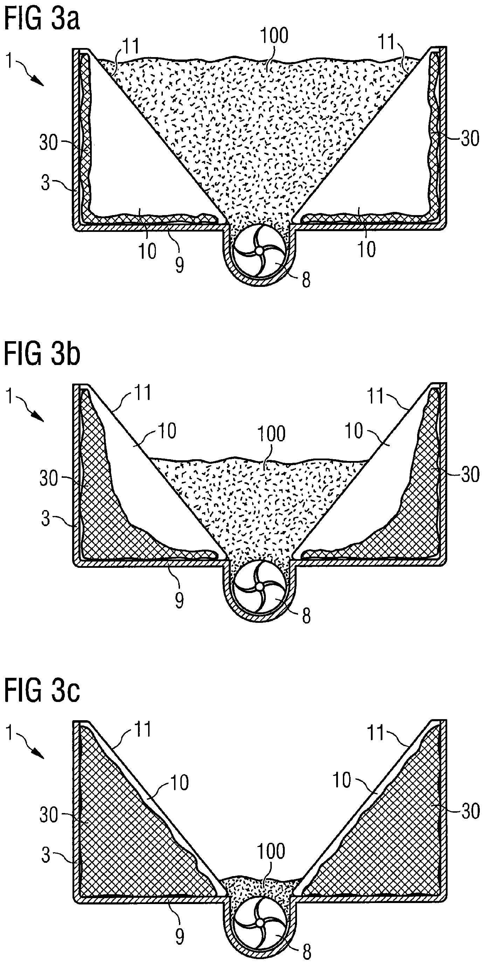

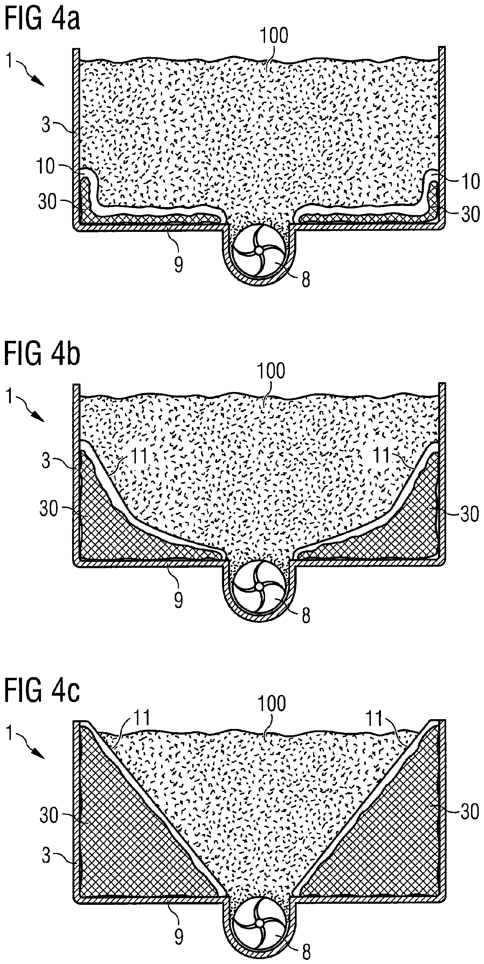

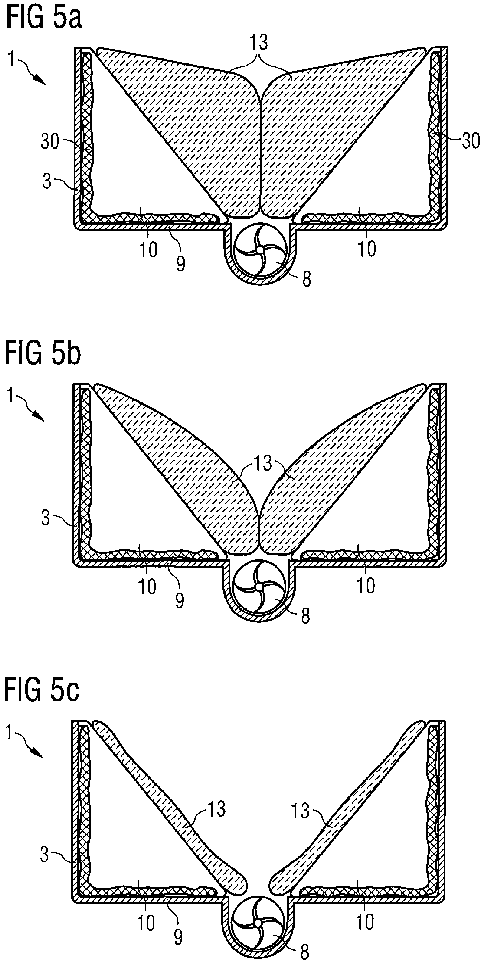

In den Figuren 3a bis 5c sind Ausführungsbeispiele von Streugeräten dargestellt, welche im Innern der Tanksäcke 10 jeweils eine expandierbare Vorrichtung in Form eines aufblasbaren Sacks oder Ballons aufweisen. Diese "Sack in Sack"-Systeme sind für unterschiedliche Anwendungen geeignet. Fig. 3a bis 3c zeigen ein Streugerät zur Feuchtsalzstreuung, Fig. 4a bis 4c ein Streugerät zur Trockensalzstreuung und Fig. 5a bis 5c ein Streugerät zur reinen Solestreuung. Die aufblasbaren Säcke 30 bestehen jeweils aus einem dehnbaren Material, damit diese mit Luft aufgeblasen werden können, wohingegen die Tanksäcke 10 bevorzugt jeweils aus einem nicht dehnbaren Material bestehen, um die Ausbildung einer Gleitfläche 11 nicht zu beeinträchtigen.

In Fig. 3a ist ein Streugerät 1 zur Feuchtsalzstreuung dargestellt, wobei die Tanksäcke 10 vollständig mit Sole gefüllt sind und das Volumen oberhalb der Tanksäcke 10 mit Streusalz 100 gefüllt ist. Die Tanksäcke 10 bilden geneigte Gleitflächen 11, auf denen das Streusalz 100 in Richtung der Förderschnecke 8 rutschen kann. Die Ausbildung der Gleitflächen 11 kann unterstützt werden, indem die Tanksäcke 10 in dem Streustoffbehälter 3 befestigt, beispielsweise zwischen der Bodenfläche 9 und der jeweils angrenzenden Seitenwand des Streustoffbehälters 3 eingespannt werden. Die Tanksäcke 10 können hierzu nahe der Förderschnecke 8 am Boden des Streustoffbehälters 3 und im oberen Bereich der Seitenwände des Streustoffbehälters 3 fixiert werden. Bei dem in Fig. 3a dargestellten Füllstand sind die Säcke 30 leer.

Um ein Einfallen der Tanksäcke 10 und damit der Gleitflächen 11 zu verhindern, werden die Säcke 30 bei Entleerung der Tanksäcke 11 entsprechend mit Luft befüllt, wie in Fig. 3b und 3c dargestellt. Das zugeführte Luftvolumen in den Säcken 30 kompensiert das aus den Tanksäcken 10 entnommene Solevolumen. Gleichzeitig wird die Sole in den Tanksäcken 10 nach oben gedrängt, so dass eine Entleerung durch eine oben liegende Öffnung (nicht dargestellt) erleichtert wird. Wie in Fig. 3b und 3c ebenfalls zu erkennen ist, kann das Streusalz 100 entlang der Gleitflächen 11 in Richtung der Förderschnecke 8 rutschen. Fig. 3c zeigt schließlich den vollständig geleerten Zustand des Streugeräts 1, wobei die aufblasbaren Säcke 30 nun maximal gefüllt sind.

In Fig. 4a bis 4c ist ein Ausführungsbeispiel eines Streugeräts 1 zur reinen Trockensalzstreuung dargestellt. Daher sind die Tanksäcke 10 in diesem Ausführungsbeispiel stets leer. Um eine maximale Füllung des Streustoffbehälters 3 mit Streusalz 100 zu erleichtern, sind die Tanksäcke 10 (im Gegensatz zu den in Fig. 2 und 3 dargestellten Ausführungsbeispielen) entlang der Seitenwände des Streustoffbehälters 3 in vertikaler Richtung verschieblich gelagert. Bei Entleerung des Streustoffbehälters 3 werden die aufblasbaren Säcke 30 mit Luft befüllt, so dass sich die Tanksäcke 10 anheben und dadurch die geneigten Gleitflächen 11 ausbilden. Die Säcke 30 nehmen dabei das Volumen der leeren Tanksäcke 10 ein. Aufgrund der verschieblichen Lagerung der Tanksäcke 10 an den Seitenwänden können diese durch Aufblasen der Säcke 30 nach oben bewegt werden, wie in Fig. 4b und 4c dargestellt. Zusätzlich kann es gegebenenfalls erforderlich sein, die Tanksäcke 10 in den Ecken des Streustoffbehälters 3 nach oben zu ziehen. Sobald sich die geneigten Gleitflächen 11, wie in Fig. 4c dargestellt, vollständig ausgebildet haben, kann das Streusalz analog Fig. 3a bis 3c entlang der Gleitflächen 11 in Richtung der Förderschnecke 8 rutschen.

In Fig. 5a bis 5c ist ein Ausführungsbeispiel eines Streugeräts 1 zur reinen Solestreuung dargestellt. Um das Volumen des Streustoffbehälters 3 voll ausnutzen zu können, sind daher zusätzliche Tanksäcke 13 vorgesehen. Damit diese im leeren Zustand (Fig. 5c) ein möglichst kleines Volumen einnehmen, sind sie vorzugsweise aus einem dehnbaren Material gefertigt. Die zusätzlichen Tanksäcke 13 können vor oder nach den Tanksäcken 10 oder auch gleichzeitig entleert werden. Die Entleerung der Tanksäcke 10 kann auf die gleiche Weise wie im Zusammenhang mit Fig. 3a bis 3c bei gleichzeitiger Füllung der aufblasbaren Säcke 30 mit Luft erfolgen. Jedoch ist eine Füllung der Säcke 30 mit Luft in diesem Ausführungsbeispiel nicht unbedingt erforderlich, da keine Gleitflächen für feste Streustoffe ausgebildet werden müssen.

Bei dem zuvor beschriebenen einfachen Ausführungsbeispiel können sich jedoch während der Entleerung beim Zusammenfallen der Tanksäcke 10 Falten bilden, in denen sich das Streusalz 100 absetzen kann. Dies kann das Entleeren des Streustoffbehälters 3 erschweren. Daher sind in den weiteren Ausführungsbeispielen gemäß Figuren 6, 7 und 8 bewegliche Platten 21, 22, 23 vorgesehen, welche die Gleitfläche 11 bilden. Die beweglichen Platten 21, 22, 23 schließen jeweils einen Teil des Volumens des Streustoffbehälters 3 ein, in dem sich einer der Tanksäcke 10 befindet. So ist bei jedem Füllstand der Tanksäcke 10 eine glatte Gleitfläche 11 gegeben.

In dem in Figur 6 dargestellten Ausführungsbeispiel sind für jeden Tanksack 10 jeweils zwei bewegliche Platten 21, 22 vorgesehen, welche mit dem Streustoffbehälter 3 schwenkbar verbunden sind. Die oberen Platten 21 sind an Drehachsen 24 im oberen Bereich mit dem Streustoffbehälter 3 verbunden, während die unteren Platten 22 an Drehachsen 25 im unteren Bereich mit dem Streustoffbehälter 3 verbunden sind. Um zu verhindern, dass das Streusalz 100 zwischen den Platten 21, 22 hindurch und unter die Platten 21, 22 gelangt, kann eine Dichtung, beispielsweise eine Schürze (nicht dargestellt) am freien Ende der oberen Platten 21 angebracht sein. Es ist auch möglich, die Platten 21, 22 fest mit den Tanksäcken 10 zu verbinden, insbesondere falls die Tanksäcke 10 aus dem Streustoffbehälter entnehmbar sind, wobei die Platten 21, 22 beim Einsetzen der Tanksäcke 10 in den Streustoffbehälter 3 dann entsprechend schwenkbar gelagert werden. Entsprechendes gilt für das in Figur 7 dargestellte Ausführungsbeispiel, in dem an den oberen Platten 21 jeweils eine weitere Platte 23 angebracht ist. Die Platten 26 sind jeweils um eine Drehachse 26 schwenkbar mit den oberen Platten 21 verbunden. Die Platten 21, 22, 23 können so im Vergleich zu dem Ausführungsbeispiel aus Figur 6 kürzer ausgebildet sein.

Figur 8 zeigt ein Ausführungsbeispiel, bei dem innerhalb der Tanksäcke 10 jeweils eine expandierbare Vorrichtung in Form eines aufblasbaren Ballons 30 angeordnet ist. Dieses Ausführungsbeispiel entspricht ansonsten dem in Figur 7 dargestellten Ausführungsbeispiel, wobei es sich versteht, dass der aufblasbare Ballon 30 auch in den anderen Ausführungsbeispielen vorgesehen werden kann, wie insbesondere im Zusammenhang mit den Figuren 3a bis 5c beschrieben. Der aufblasbare Ballon 30 dient dazu, die Gleitflächen 11, welche entweder durch die Tanksäcke 10 selbst oder durch die beweglichen Platten 21, 22, 23 gebildet werden, aufzurichten, wenn der Füllstand in den Tanksäcken 10 so niedrig ist, dass die Gleitflächen 11 zu flach werden und das Streusalz 100 nicht mehr schwerkraftbedingt entlang der Gleitflächen 11 rutschen würde. Bei einer Feuchtsalzstreuung kann während des Entleerens der Tanksäcke 10 das schwindende Volumen durch Aufblasen der Ballons 30 kompensiert werden, so dass die Neigung der Gleitflächen 11 während des gesamten Streuvorgangs im Wesentlichen konstant bleibt. Dies kann beispielsweise durch Druckluft erfolgen, welche in die Ballons 30 gepumpt wird. Bei einer reinen Trockensalzstreuung ist es zur vollständigen Entleerung des Streustoffbehälters 3 notwendig, ab einem bestimmten Zeitpunkt die Gleitflächen 11 anzuheben, damit das gesamte Streusalz 100 in Richtung der Förderschnecke 8 rutschen kann. Die Ballons 30 können aber auch dazu benutzt werden, das Streusalz 100 zu lockern, falls es sich festgesetzt hat. Beispielsweise kann es vorkommen, dass sich durch den Abtransport des Streusalzes 100 über der Förderschnecke 8 ein Tunnel bildet, wenn das Streusalz zu fest ist oder zur Verklumpung neigt. Um dies zu beheben oder schon im Vorfeld zu vermeiden, können die Ballons 30 pulsartig mit Druckluft gefüllt und wieder entleert werden, um eine Lockerung des Streusalzes 100 zu erreichen.

Weitere alternative Ausgestaltungen der Erfindung sind möglich, insbesondere durch Kombination einzelner Merkmale der vorbeschriebenen Ausführungsbeispiele. Beispielsweise kann der Streustoffbehälter sowohl längs als auch quer unterteilt sein und zum Beispiel vier seitlich gelagerte Tanksäcke aufnehmen. Außerdem ist es möglich, die Tanksäcke im Zuge ihrer Entleerung mit Luft zu füllen anstatt darin aufgenommene Ballons entsprechend aufzublasen.

## Patentansprüche

1. Streugerät (1), insbesondere für Winterdienstfahrzeuge, zum Ausstreuen von festen Streustoffen (100), umfassend einen Streustoffbehälter (3) zur Aufnahme der auszustreuenden festen Streustoffe (100) und eine Fördereinrichtung (8) in einer Bodenfläche (9) des Streustoffbehälters (3) zum Fördern der Streustoffe (100) aus dem Streustoffbehälter (3) hinaus und des Weiteren umfassend zumindest einen innerhalb des Streustoffbehälters (3), seitlich der Fördereinrichtung (8) angeordneten Flüssigkeitstank (10) mit einer zumindest teilweise flexiblen Hülle und variablem Volumen, wobei die Bodenfläche (9) des Streustoffbehälters (3) horizontal oder nahezu horizontal ausgebildet ist und der mindestens eine Flüssigkeitstank (10) auf oder über der Bodenfläche (9) so angeordnet ist, dass bei einer zumindest teilweisen Füllung des Flüssigkeitstanks (10) eine gegenüber der Bodenfläche (9) zur Fördereinrichtung (8) hin geneigte Gleitfläche (11) für die auszustreuenden festen Streustoffe (100) besteht, wobei der Streustoffbehälter (3) eingerichtet ist, vollständig oder nahezu vollständig mit auszustreuenden festen Streustoffen (100) befüllt zu werden, wenn der mindestens eine Flüssigkeitstank (10) leer ist, so dass die auszustreuenden festen Streustoffe (100) mittels der Fördereinrichtung (8) aus dem Streustoffbehälter (3) hinaus befördert werden können.

2. Streugerät nach Anspruch 1, wobei der mindestens eine Flüssigkeitstank (10) ausgebildet ist, im vollständig entleerten Zustand innerhalb des Streustoffbehälters (3) zu verbleiben, wobei gleichzeitig auszustreuende feste Streustoffe (100) in dem Streustoffbehälter (3) aufgenommen und mittels des Streugeräts (1) ausgestreut werden können.

3. Streugerät nach Anspruch 1 oder 2, des Weiteren umfassend zumindest eine bewegliche Platte (21, 22, 23), die derart in dem Streustoffbehälter (3) angeordnet ist oder angeordnet werden kann, dass sich der zumindest eine Flüssigkeitstank (10) zwischen der Bodenfläche (9) und/oder einer Seitenfläche des Streustoffbehälters (3) und der zumindest einen beweglichen Platte (21, 22, 23) befindet, so dass die geneigte Gleitfläche (11) zumindest teilweise durch eine Oberfläche der zumindest einen beweglichen Platte (21, 22, 23) gebildet wird, wobei vorzugsweise die zumindest eine bewegliche Platte (21, 22, 23) derart mit dem Streustoffbehälter (3) gelenkig verbunden ist, dass eine Neigung der Platte (21, 22, 23) veränderbar ist.

4. Streugerät nach Anspruch 3, wobei mindestens zwei bewegliche Platten (21, 22, 23) vorgesehen sind und zumindest eine (21) der beweglichen Platten in einem oberen Bereich des Streustoffbehälters (3) um eine horizontale Drehachse (24) schwenkbar angeordnet ist und zumindest eine weitere (22) der beweglichen Platten um eine dazu parallele Drehachse (25) in einem unteren Bereich des Streustoffbehälters (3) schwenkbar angeordnet ist.

5. Streugerät nach einem der Ansprüche 3 oder 4, wobei mindestens zwei bewegliche Platten (21, 23) vorgesehen sind, welche gelenkig miteinander verbunden sind.

6. Streugerät nach einem der Ansprüche 3 bis 5, wobei die zumindest eine bewegliche Platte (21, 22, 23) derart ausgebildet ist, dass sie einen quaderförmigen oder prismenförmigen Volumenanteil des Volumens des Streustoffbehälters (3) umschließen kann, in welchem der Flüssigkeitstank (10) untergebracht ist.

7. Streugerät nach einem der Ansprüche 3 bis 6, wobei die zumindest eine bewegliche Platte (21, 22, 23) gegen den Streustoffbehälter (3) abgedichtet ist (27), um zu verhindern, dass in dem Streustoffbehälter (3) aufgenommene Streustoffe (100) auf eine Seite der beweglichen Platte (21, 22, 23) gelangen, welche von der Gleitfläche (11) abgewandt ist.

8. Streugerät nach einem der Ansprüche 1 bis 7, wobei in dem Flüssigkeitstank (10) eine expandierbare Vorrichtung (30) angeordnet ist, die vorzugsweise zumindest teilweise aus einem elastischen Material besteht, so dass die expandierbare Vorrichtung (30) ballonartig expandieren kann.

9. Streugerät nach einem der Ansprüche 1 bis 8, wobei der Flüssigkeitstank (10) zumindest teilweise aus einem elastischen Material besteht, so dass der Flüssigkeitstank (10) ballonartig expandieren kann.

10. Streustoffbehälter (3) für Winterdienstfahrzeuge zur Aufnahme von auszustreuenden festen Streustoffen (100), umfassend eine Fördereinrichtung (8) in einer Bodenfläche (9) des Streustoffbehälters (3) zum Fördern der Streustoffe (100) aus dem Streustoffbehälter (3) hinaus, wobei die Bodenfläche (9) des Streustoffbehälters (3) horizontal oder nahezu horizontal ausgebildet ist und die Fördereinrichtung (8) innerhalb der horizontalen oder nahezu horizontalen Bodenfläche (9) verläuft, wobei die Bodenfläche (9) des Streustoffbehälters (3) so eingerichtet ist, dass mindestens ein Flüssigkeitstank (10) mit einer zumindest teilweise flexiblen Hülle und variablem Volumen auf der Bodenfläche (9) so angeordnet werden kann, dass bei einer zumindest teilweisen Füllung des Flüssigkeitstanks (10) eine gegenüber der Bodenfläche (9) zur Fördereinrichtung (8) hin geneigte Gleitfläche (11) für die auszustreuenden festen Streustoffe (100) besteht, wobei der Streustoffbehälter (3) eingerichtet ist, vollständig oder nahezu vollständig mit festen Streustoffen (100) befüllt zu werden, wenn der mindestens eine Flüssigkeitstank (10) leer ist, so dass die auszustreuenden festen Streustoffe (100) mittels der Fördereinrichtung (8) aus dem Streustoffbehälter (3) hinaus befördert werden können.

11. Streustoffbehälter nach Anspruch 10, umfassend zumindest eine bewegliche Platte (21, 22, 23), welche mit dem Streustoffbehälter (3) gelenkig verbunden ist und in einer geneigten Lage eine Gleitfläche (11) für in dem Streustoffbehälter (3) aufgenommene Streustoffe (100) hin zur Fördereinrichtung (8) bildet, wobei vorzugsweise mindestens zwei bewegliche Platten (21, 22, 23) vorgesehen sind und zumindest eine (21) der beweglichen Platten in einem oberen Bereich des Streustoffbehälters (3) um eine horizontale Drehachse (24) schwenkbar angeordnet ist und zumindest eine weitere (22) der beweglichen Platten um eine dazu parallele Drehachse (25) in einem unteren Bereich des Streustoffbehälters (3) schwenkbar angeordnet ist, wobei weiter vorzugsweise die zumindest eine bewegliche Platte (21, 22, 23) gegen den Streustoffbehälter (3) abgedichtet ist (27), um zu verhindern, dass in dem Streustoffbehälter (3) aufgenommene Streustoffe (100) auf eine Seite der beweglichen Platte (21, 22, 23) gelangen, welche von der Gleitfläche (11) abgewandt ist.

12. Flüssigkeitstank (10), eingerichtet zur Aufnahme und Entnahme von Flüssigkeit und eingerichtet zum Anordnen innerhalb eines Streustoffbehälters (3) für Winterdienstfahrzeuge, der eine horizontale oder nahezu horizontale Bodenfläche (9) und eine Fördereinrichtung (8) in der Bodenfläche (9) zum Fördern von in dem Streustoffbehälter (3) aufgenommenen und auszustreuenden festen Streustoffen (100) aus dem Streustoffbehälter (3) hinaus umfasst, vorzugsweise innerhalb eines Streustoffbehälters (3) nach einem der Ansprüche 10 oder 11, wobei der Flüssigkeitstank (10) eine zumindest teilweise flexible Hülle und ein variables Volumen besitzt, wobei der Flüssigkeitstank (10) derart angepasst ist, dass er auf oder über der horizontalen oder nahezu horizontalen Bodenfläche (9) des Streustoffbehälters (3) angeordnet werden kann und durch zumindest teilweises Befüllen eine gegenüber der Bodenfläche (9) zur Fördereinrichtung (8) hin geneigte Gleitfläche (11) für auszustreuende feste Streustoffe (100) innerhalb des Streustoffbehälters (3) bilden kann, wobei der Flüssigkeitstank (10) eingerichtet ist, während des Ausstreuens der festen Streustoffe (100) aus dem Streustoffbehälter (3) nach und nach mit Luft befüllt zu werden, um die Neigung der Gleitfläche (11) zu verändern, wobei der Flüssigkeitstank (10) zumindest eine Platte (21, 22, 23) umfasst, welche an dem Flüssigkeitstank (10) beweglich befestigt ist.

13. Flüssigkeitstank nach Anspruch 12, wobei in dem Flüssigkeitstank (10) eine expandierbare Vorrichtung (30) angeordnet ist, die vorzugsweise zumindest teilweise aus einem elastischen Material besteht, so dass sie ballonartig expandieren kann.

14. Flüssigkeitstank nach einem der Ansprüche 12 oder 13, wobei der Flüssigkeitstank (10) zumindest teilweise aus einem elastischen Material besteht, so dass er ballonartig expandieren kann.

15. Verfahren zum Entleeren eines Streustoffbehälters (3) eines Streugeräts (1) nach einem der Ansprüche 1 bis 9, **dadurch gekennzeichnet, dass** der zumindest eine Flüssigkeitstank (10) und/oder gegebenenfalls eine darin aufgenommene expandierbare Vorrichtung (30) pulsierend gefüllt und entleert wird, um in dem Streustoffbehälter (3) aufgenommene Streustoffe (100) zu lockern, wobei vorzugsweise in dem Streustoffbehälter (3) aufgenommene Streustoffe (100) erwärmt werden, indem der zumindest eine Flüssigkeitstank (40) vor dem Entleeren des Streustoffbehälters (3) zumindest teilweise mit einem erwärmten Fluid befüllt wird.

## Claims

1. A spreading apparatus (1), in particular for winter service vehicles, for spreading solid spreading materials (100), comprising a spreading material container (3) for receiving the solid spreading materials (100) to be spread and a conveyor device (8) in a bottom surface (9) of the spreading material container (3) for conveying the spreading materials (100) out of the spreading material container (3), and further comprising at least one liquid tank (10) arranged within the spreading material container (3) on the side of the conveyor device (8), said tank having an at least partially flexible sheath and variable volume, wherein the bottom surface (9) of the spreading material container (3) is configured to be horizontal or almost horizontal and the at least one liquid tank (10) is arranged on or above the bottom surface (9) such that, when the liquid tank (10) is at least partially filled, there exists a sliding surface (11) for the solid spreading materials (100) to be spread which is inclined relation to the bottom surface (9) towards the conveyor device (8), wherein the spreading material container (3) is adapted to be filled completely or almost completely with solid spreading materials (100) to be spread when the at least one liquid tank (10) is empty, so that the solid spreading materials (100) to be spread can be conveyed out of the spreading material container (3) by means of the conveyor device (8).

2. The spreading apparatus (1) according to claim 1, wherein the at least one liquid tank (10) is configured to remain within the spreading material container (3) in the completely emptied state, wherein at the same time solid spreading materials (100) to be spread can be received in the spreading material container (3) and can be spread by means of the spreading apparatus (1).

3. The spreading apparatus (1) according to claim 1 or 2, further comprising at least one movable plate (21, 22, 23) which is arranged or can be arranged in the spreading material container (3) in such a manner that the at least one liquid tank (10) is disposed between the bottom surface (9) and/or a side surface of the spreading material container (3) and the at least one movable plate (21, 22, 23), so that the inclined sliding surface (11) is formed at least partially by a surface area of the at least one movable plate (21, 22, 23), wherein preferably the at least one movable plate (21, 22, 23) is connected in jointed manner with the spreading material container (3) such that an inclination of the plate (21, 22, 23) can be changed.

4. The spreading apparatus according to claim 3, wherein at least two movable plates (21, 22, 23) are provided and at least one (21) of the movable plates is arranged pivotally about a horizontal rotation axis (24) in an upper region of the spreading material container (3) and at least one further one (22) of the movable plates is arranged pivotally about a rotation axis (25) parallel thereto in a lower region of the spreading material container (3).

5. The spreading apparatus according to any of claims 3 or 4, wherein at least two movable plates (21, 23) are provided which are interconnected in jointed manner.

6. The spreading apparatus according to any of claims 3 to 5, wherein the at least one movable plate (21, 22, 23) is configured such that it can enclose a cuboid or prism-shaped volume proportion of the volume of the spreading material container (3) in which the liquid tank (10) is accommodated.

7. The spreading apparatus according to any of claims 3 to 6, wherein the at least one movable plate (21, 22, 23) is sealed against the spreading material container (3) in order to prevent spreading materials (100) received in the spreading material container (3) from getting to a side of the movable plate (21, 22, 23) that faces away from the sliding surface (11).

8. The spreading apparatus according to any of claims 1 to 7, wherein in the liquid tank (10) an expandable apparatus (30) is arranged, which consists preferably at least partially of an elastic material, so that the expandable apparatus (30) can expand in the manner of a balloon.

9. The spreading apparatus according to any of claims 1 to 8, wherein the liquid tank (10) consists at least partially of an elastic material, so that the liquid tank (10) can expand in the manner of a balloon.

10. A spreading material container (3) for winter service vehicles for receiving solid spreading materials (100) to be spread, comprising a conveyor device (8) in a bottom surface (9) of the spreading material container (3) for conveying the spreading materials (100) out of the spreading material container (3), wherein the bottom surface (9) of the spreading material container (3) is configured to be horizontal or almost horizontal and the conveyor device (8) extends within the horizontal or almost horizontal bottom surface (9), wherein the bottom surface (9) of the spreading material container (3) is adapted such that at least one liquid tank (10) with an at least partially flexible sheath and variable volume can be arranged on the bottom surface (9) such that, when the liquid tank (10) is at least partially filled, there exists a sliding surface (11) for the solid spreading materials (100) to be spread that is inclined in relation to the bottom surface (9) towards the conveyor device (8), wherein the spreading material container (3) is adapted to be filled completely or almost completely with solid spreading materials (100) when the at least one liquid tank (10) is empty, so that the solid spreading materials (100) to be spread can be conveyed out of the spreading material container (3) by means of the conveyor device (8).

11. The spreading material container according to claim 10, comprising at least one movable plate (21, 22, 23) which is connected with the spreading material container (3) in jointed manner and in an inclined position forms a sliding surface (11) towards the conveyor device (8) for spreading materials (100) received in the spreading material container (3), wherein preferably at least two movable plates (21, 22, 23) are provided and at least one (21) of the movable plates is arranged pivotally about a horizontal rotation axis (24) in an upper region of the spreading material container (3) and at least one further one (22) of the movable plates is arranged pivotally about a rotation axis (25) parallel thereto in a lower region of the spreading material container (3), wherein further preferably the at least one movable plate (21, 22, 23) is sealed (27) against the spreading material container (3) in order to prevent spreading materials (100) received in the spreading material container (3) from getting to a side of the movable plate (21, 22, 23) that faces away from the sliding surface (11).

12. A liquid tank (10) adapted for receipt and removal of liquid and adapted to be arranged within a spreading material container (3) for winter service vehicles, said container comprising a horizontal or almost horizontal bottom surface (9) and a conveyor device (8) in the bottom surface (9) for conveying solid spreading materials (100) to be spread that are received in the spreading material container (3) out of the spreading material container (3), preferably within a spreading material container (3) according to any of claims 10 or 11, wherein the liquid tank (10) has an at least partially elastic sheath and a variable volume, wherein the liquid tank (10) is adjusted in such a manner that it can be arranged on or above the horizontal or almost horizontal bottom surface (9) of the spreading material container (3) and, by being filled at least partially, can form within the spreading material container (3) a sliding surface (11) for solid spreading materials (100) to be spread that is inclined in relation to the bottom surface (9) towards the conveyor device (8), wherein the liquid tank (10) is adapted to be filled gradually with air during the spreading of the solid spreading materials (100) from the spreading material container (3), so as to change the inclination of the sliding surface (11), wherein the liquid tank (10) comprises at least one plate (21, 22, 23) that is movably connected with the liquid tank (10).

13. The liquid tank according to claim 12, wherein in the liquid tank (10) there is arranged an expandable apparatus (30) which preferably consists at least partially of an elastic material, so that it can expand in the manner of a balloon.

14. The liquid tank according to any of claims 12 or 13, wherein the liquid tank (10) consists at least partially of an elastic material, so that it can expand in the manner of a balloon.

15. A method for emptying a spreading material container (3) of a spreading device (1) according to any of claims 1 to 9, **characterized in that** the at least one liquid tank (10) and/or possibly an expandable apparatus (30) received therein is filled and emptied in pulsating manner in order to loosen spreading materials (100) received in the spreading material container (3), wherein preferably spreading materials (100) received in the spreading material container (3) are heated by the at least one liquid tank (40) being filled at least partially with a heated fluid before the emptying of the spreading material container (3).

## Revendications

1. Appareil d'épandage (1), en particulier pour véhicules de service hivernal, destiné à l'épandage de matériaux d'épandage solides (100), comprenant un réservoir à matériau d'épandage (3) pour le recueil des matériaux d'épandage solides (100) à épandre, et un équipement de convoyage (8) situé dans une face de fond (9) du réservoir à matériau d'épandage (3) et destiné à convoyer les matériaux d'épandage (100) en les évacuant du réservoir à matériau d'épandage (3), et comprenant en outre au moins un tank à liquide (10) qui est agencé à l'intérieur du réservoir à matériau d'épandage (3), latéralement par rapport à l'équipement de convoyage (8), et qui possède une enveloppe au moins partiellement flexible et un volume variable, cependant que la face de fond (9) du réservoir à matériau d'épandage (3) est réalisée sous forme horizontale ou presque horizontale, et que le au moins une tank à liquide (10) est agencé de telle manière sur ou au-dessus de la face de fond (9) que, dans le cas d'un remplissage au moins partiel du tank à liquide (10), une surface de glissement (11) inclinée vers l'équipement de convoyage (8) par rapport à la face de fond (9) est obtenue pour les matériaux d'épandage solides (100) à épandre, cependant que le réservoir à matériau d'épandage (3) est conçu pour, quand le au moins une tank à liquide (10) est vide, être rempli entièrement ou presque entièrement de matériaux d'épandage solides (100) à épandre, de telle sorte que les matériaux d'épandage solides (100) à épandre peuvent, au moyen de l'équipement de convoyage (8), être évacués du réservoir à matériau d'épandage (3).

2. Appareil d'épandage selon la revendication 1, le au moins un tank à liquide (10) étant réalisé pour rester à l'intérieur du réservoir à matériau d'épandage (3) à l'état entièrement vidé, cependant que des matériaux d'épandage solides (100) à épandre simultanément sont recueillis dans le réservoir à matériau d'épandage (3) et peuvent être épandus au moyen de l'appareil d'épandage (1).

3. Appareil d'épandage selon la revendication 1 ou 2, comprenant en outre au moins une plaque mobile (21, 22, 23) agencée ou pouvant être agencée de telle façon dans le réservoir à matériau d'épandage (3) que le au moins une tank à liquide (10) se trouve entre la face de fond (9) et/ou une face latérale du réservoir à matériau d'épandage (3) et la au moins une plaque mobile (21, 22, 23), de telle sorte que la surface de glissement (11) inclinée est constituée au moins partiellement par une surface de la au moins une plaque mobile (21, 22, 23), cependant que, de préférence, la au moins une plaque mobile (21, 22, 23) est reliée de telle façon de manière articulée au réservoir à matériau d'épandage (3) qu'une inclinaison de la plaque (21, 22, 23) est modifiable.

4. Appareil d'épandage selon la revendication 3, cependant qu'au moins deux plaques mobiles (21, 22, 23) sont prévues, et qu'au moins une (21) des plaques mobiles est, dans une zone supérieure du réservoir à matériau d'épandage (3), agencée de manière à pouvoir pivoter autour d'un axe de rotation horizontal (24), et qu'au moins une autre (22) des plaques mobiles est agencée de manière à pouvoir pivoter autour d'un axe de rotation (25) parallèle à ceci dans une zone inférieure du réservoir à matériau d'épandage (3).

5. Appareil d'épandage selon une des revendications 3 ou 4, au moins deux plaques mobiles (21, 23) étant prévues, lesquelles sont reliées entre elles de manière articulée.

6. Appareil d'épandage selon une des revendications de 3 à 5, cependant que la au moins une plaque mobile (21, 22, 23) est réalisée de telle façon qu'elle peut enserrer une partie de volume parallélépipédique ou prismatique du volume du réservoir à matériau d'épandage (3) dans lequel est recueilli le tank à liquide (10).

7. Appareil d'épandage selon une des revendications de 3 à 6, cependant que la au moins une plaque mobile (21, 22, 23) est étanchéifiée (27) contre le réservoir à matériau d'épandage (3) afin d'éviter que des matériaux d'épandage (100) recueillis dans le réservoir à matériau d'épandage (3) ne parviennent à une face de la plaque mobile (21, 22, 23) non tournée vers la surface de glissement (11).

8. Appareil d'épandage selon une des revendications de 1 à 7, cependant que, dans le tank à liquide (10), un dispositif (30) expansible est agencé, lequel, de préférence, consiste au moins partiellement en un matériau élastique, de telle sorte que le dispositif (30) expansible peut se dilater à la manière d'un ballon.

9. Appareil d'épandage selon une des revendications de 1 à 8, cependant que le tank à liquide (10) consiste au moins partiellement en un matériau élastique, de telle sorte que le tank à liquide (10) peut se dilater à la manière d'un ballon.

10. Réservoir à matériau d'épandage (3) pour véhicules de service hivernal, destiné au recueil de matériaux d'épandage solides (100) à épandre, comprenant un équipement de convoyage (8) situé dans une face de fond (9) du réservoir à matériau d'épandage (3) et destiné à convoyer les matériaux d'épandage (100) en les évacuant du réservoir à matériau d'épandage (3), cependant que la face de fond (9) du réservoir à matériau d'épandage (3) est réalisée sous forme horizontale ou presque horizontale, et que l'équipement de convoyage (8) s'étend à l'intérieur de la face de fond (9) horizontale ou presque horizontale, cependant que la face de fond (9) du réservoir à matériau d'épandage (3) est conçue de telle manière qu'au moins un tank à liquide (10) ayant une enveloppe au moins partiellement flexible et un volume variable peut être agencé de telle façon sur la face de fond (9) que, dans le cas d'un remplissage au moins partiel du tank à liquide (10), une surface de glissement (11) inclinée vers l'équipement de convoyage (8) par rapport à la face de fond (9) est obtenue pour les matériaux d'épandage solides (100) à épandre, cependant que le réservoir à matériau d'épandage (3) est conçu pour être rempli entièrement ou presque entièrement de matériaux d'épandage solides (100) quand le au moins une tank à liquide (10) est vide, de telle sorte que les matériaux d'épandage solides (100) à épandre peuvent, au moyen de l'équipement de convoyage (8), être évacués du réservoir à matériau d'épandage (3).

11. Réservoir à matériau d'épandage selon la revendication 10, comprenant au moins une plaque mobile (21, 22, 23) qui est reliée de manière articulée au réservoir à matériau d'épandage (3) et qui, dans une position inclinée, constitue une surface de glissement (11), pour des matériaux d'épandage (100) recueillis dans le réservoir à matériau d'épandage (3), vers l'équipement de convoyage (8), cependant que, de préférence, au moins deux plaques mobiles (21, 22, 23) sont prévues, et qu'au moins une (21) des plaques mobiles est, dans une zone supérieure du réservoir à matériau d'épandage (3), agencée de manière à pouvoir pivoter autour d'un axe de rotation horizontal (24), et au moins une autre (22) des plaques mobiles est agencée de manière à pouvoir pivoter autour d'un axe de rotation (25) parallèle à ceci dans une zone inférieure du réservoir à matériau d'épandage (3), cependant que, en outre, de préférence, la au moins une plaque mobile (21, 22, 23) est étanchéifiée (27) contre le réservoir à matériau d'épandage (3) afin d'éviter que des matériaux d'épandage (100) recueillis dans le réservoir à matériau d'épandage (3) ne parviennent à une face de la plaque mobile (21, 22, 23) non tournée vers la surface de glissement (11).

12. Tank à liquide (10) conçu pour le recueil et le prélèvement de liquide et conçu pour un agencement à l'intérieur d'un réservoir à matériau d'épandage (3) pour véhicules de service hivernal comprenant une face de fond (9) horizontale ou presque horizontale et un équipement de convoyage (8) situé dans la face de fond (9) et destiné à convoyer en les évacuant du réservoir à matériau d'épandage (3) des matériaux d'épandage (100) solides recueillis dans le réservoir à matériau d'épandage (3) et devant être épandus, de préférence à l'intérieur d'un réservoir à matériau d'épandage (3) selon une des revendications 10 ou 11, cependant que le tank à liquide (10) possède une enveloppe au moins partiellement flexible et un volume variable, cependant que le tank à liquide (10) est adapté de telle manière qu'il peut être agencé sur ou au-dessus de la face de fond (9) horizontale ou presque horizontale du réservoir à matériau d'épandage (3) et peut, par remplissage au moins partiel, constituer à l'intérieur du réservoir à matériau d'épandage (3) une surface de glissement (11) inclinée vers l'équipement de convoyage (8) par rapport à la face de fond (9) pour des matériaux d'épandage solides (100) à épandre, cependant que le tank à liquide (10) est conçu pour être rempli peu à peu d'air pendant l'épandage des matériaux d'épandage solides (100) depuis le réservoir à matériau d'épandage (3) afin de modifier l'inclinaison de la surface de glissement (11), cependant que le tank à liquide (10) comprend au moins une plaque (21, 22, 23) qui est reliée de manière mobile au tank à liquide (10).

13. Tank à liquide selon la revendication 12, cependant que, dans le tank à liquide (10), un dispositif (30) expansible est agencé, lequel, de préférence, consiste au moins partiellement en un matériau élastique, de telle sorte qu'il peut se dilater à la manière d'un ballon.

14. Tank à liquide selon une des revendications 12 ou 13, cependant que le tank à liquide (10) consiste au moins partiellement en un matériau élastique, de telle sorte qu'il peut se dilater à la manière d'un ballon.

15. Procédé de vidage d'un réservoir à matériau d'épandage (3) d'un appareil d'épandage (1) selon une des revendications de 1 à 9, **caractérisé en ce que** le au moins un tank à liquide (10) et/ou éventuellement un dispositif (30) expansible y étant logé est rempli et vidé de manière pulsée afin d'ameublir des matériaux d'épandage (100) recueillis dans le réservoir à matériau d'épandage (3), cependant que, de préférence, des matériaux d'épandage (100) recueillis dans le réservoir à matériau d'épandage (3) sont chauffés, ce qui a lieu **en ce que** le au moins un tank à liquide (40) est, avant le vidage du réservoir à matériau d'épandage (3), au moins partiellement rempli d'un fluide chauffé.
